# EUROPEAN PATENT SPECIFICATION

(11) **EP 2 857 711 B1**
(45) Date of publication and mention of the grant of the patent: **03.06.2020**
(21) Application number: 14185184.0
(22) Date of filing: 17.09.2014
(51) Int. Cl.: F16F 9/02

(54) **OVERTRAVEL PRESSURE RELIEF FOR A GAS SPRING**
BEGRENZUNGSDRUCKENTLASTUNG FÜR EINE GASFEDER
DÉCHARGE DE PRESSION DE DÉPASSEMENT DE COURSE POUR RESSORT À GAZ

(30) Priority: 19.09.2013 US 201361879693 P; 11.09.2014 US 201414483196
(43) Date of publication of application: 08.04.2015
(73) Proprietor: Dadco, Inc., Plymouth MI 48170 (US)
(72) Inventor: Cotter, Jonathan P., Dearborn, MI Michigan 48124 (US)
(74) Representative: Heyer, Volker

(56) References cited:
- EP-A1- 0 427 468
- EP-A2- 2 177 783
- FR-A1- 2 779 194
- FR-A1- 2 833 326

## Description

### Technical Field

This invention relates generally to gas springs and, more particularly, to overtravel pressure relief features for gas springs.

### Background

Gas springs are well known and have been used in dies of presses for sheet metal stamping operations. For example, gas springs can be used as press cushions, among many other types of applications. A conventional gas spring includes a casing, a piston rod carried in the casing, a bearing and sealing housing held in the casing by a retainer to guide and retain the piston rod within the casing, and a pressure chamber to hold pressurized gas, typically nitrogen at an operating pressure of, for example, 2,000 to 5,000 PSI (138 to 345 bar) in some applications. The housing includes one or more bearings to guide movement of the piston rod within the casing, and one or more seals to prevent leakage from the pressure chamber. The pressurized gas biases the piston rod to an extended position, and yieldably resists movement of the piston rod from the extended position to a retracted position. But the piston rod may overtravel beyond a design-intent retracted position, and overtravel may result in undesirable gas overpressure and other adverse conditions. A safety apparatus for gas springs for the case of overtravel is disclosed e.g. in the document EP2177783.

### Summary

In at least one implementation, a gas spring for forming equipment includes a casing including an axially extending side wall, an open end, a transversely extending closed end wall axially spaced from the open end, a pressure chamber established in part by the side and end walls to receive a gas under pressure, and a vent passage through the side wall. The gas spring also includes a piston rod received at least in part in the casing for reciprocation between extended and retracted positions, and a piston rod housing received at least in part in the casing between the piston rod and the casing. The gas spring further includes an overtravel pressure relief feature carried in the vent passage of the casing and having a through passage and an annular seal that seals against the piston rod housing.

In another implementation, a gas spring for forming equipment includes a casing including an axially extending side wall, an open end, a transversely extending closed end wall axially spaced from the open end, a pressure chamber established in part by the side and end walls to receive a gas under pressure, and an internal annular casing seal groove in the casing. The gas spring also includes an annular casing seal carried in the seal groove in the casing, and a piston rod received at least in part in the casing for reciprocation between extended and retracted positions. The gas spring further includes a piston rod housing received at least in part in the casing between the piston rod and the casing and having a cylindrical lower skirt in sealing engagement with the casing seal and having an overtravel pressure relief feature axially adjacent the casing seal, wherein displacement of the housing into the casing results in breach of the casing seal.

Some potential objects, features and advantages of the gas spring and/or its components set forth herein include providing a device that is readily usable with a wide range of forming equipment, readily permits use of common components among gas springs of different configuration and construction, can be easily serviced and its components replaced as needed, can be used in a wide range of applications having different size and force requirements, is readily adaptable to a wide range of press configurations, includes an overtravel pressure relief feature, and is of relatively simple design, economical manufacture and assembly, robust, durable, reliable and in service has a long useful life. Of course, an apparatus embodying the present invention may achieve, none, some, all or different objects, features or advantages than those set forth with regard to the illustrative embodiments disclosed herein.

### Brief Description of the Drawings

The following detailed description of preferred embodiments and best mode will be set forth with regard to the accompanying drawings in which:
FIG. 1 is a fragmentary, sectional, perspective view of a presently preferred form of a gas spring with overtravel pressure relief features;
FIG. 2 is an enlarged, fragmentary, sectional view of the gas spring of FIG. 1, illustrating a piston in a normal retracted position with respect to a casing;
FIG. 3 is an enlarged, fragmentary, sectional view of the gas spring of FIG. 1, and, in contrast to FIG. 2, illustrates the piston in an overtravel position with respect to the casing;
FIG. 4 is a fragmentary, sectional, perspective view of another presently preferred form of a gas spring with an overtravel pressure relief feature, and with a multi-piece piston rod housing;
FIG. 5 is an enlarged, fragmentary, sectional view of the gas spring of FIG. 4, illustrating a coupling arrangement between upper and lower portions of the piston rod housing;
FIG. 6 is an enlarged, fragmentary, sectional view of the gas spring of FIG. 4, illustrating the piston rod housing;
FIG. 7 is a further enlarged, fragmentary, sectional view of the gas spring of FIG. 4, illustrating an overtravel condition thereof;
FIG. 8 is a cross-sectional, elevational view of an additional presently preferred form of a gas spring with an overtravel pressure relief feature, and with a multi-piece piston rod housing;
FIG. 9 is an enlarged, fragmentary, sectional view of the gas spring of FIG. 8, taken from oval 9 of FIG. 8, illustrating the piston rod housing; and
FIG. 10 is an enlarged, exploded view of the multi-piece piston rod housing of FIG. 8.

### Detailed Description of Preferred Embodiments

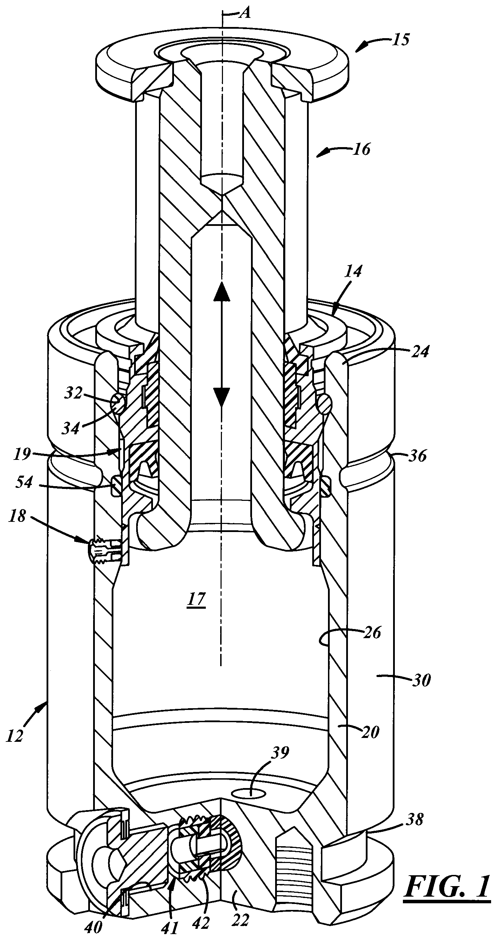

Referring in more detail to the drawings, FIG. 1 illustrates a gas spring 10 that may be used in forming equipment, for example, sheet metal stamping dies and mechanical presses (not shown). In general, the gas spring 10 includes a casing 12, a guide and seal assembly 14 carried by the casing 12, a piston rod 16 carried by the casing 12 and extending through the guide and seal assembly 14 and having a piston plate 15 coupled thereto by fasteners, cooperating threads or other features, or in any suitable manner. The gas spring 10 also includes a pressure chamber 17 to hold a pressurized gas. An outer axial end of the piston rod 16 and/or the plate 15 may be engageable with a die member or another portion of a press or piece of forming equipment (not shown).

For example, one or more of the gas springs 10 may be used in various implementations in forming equipment to provide a moveable component for support of a forming die or a workpiece with a yielding force or a return force. For example, in a binder ring implementation, the gas spring 10 may provide a yielding force against a binder ring of a forming die to hold a metal workpiece while another part of the forming die forms, cuts, stretches, or bends the workpiece. In a lifter implementation, the gas spring 10 may provide a yielding force and return force to lift a workpiece off a surface of the forming die or to otherwise maintain control of the workpiece. In a cam tool implementation, the gas spring 10 may apply a yielding force to return a cam-activated tool to its home position. Of course, the gas spring 10 may be used in a wide range of other implementations.

According to the present disclosure, the gas spring 10 includes an overstroke or overtravel pressure relief feature 18 in the event of an overtravel condition of a piece of forming equipment with which the gas spring 10 may be used. As will be discussed in greater detail below, the overtravel pressure relief feature 18 is carried by the casing 12. As an alternative, the gas spring 10 may include a different overtravel pressure relief feature 19 that may be carried by the assembly 14. Although both features are illustrated in the drawings, it is contemplated that only one or the other may be implemented for any given gas spring.

Each of the features 18, 19 are in fluid communication with the pressure chamber 17 during an overtravel condition and function to allow pressurized gas to be communicated out of the pressure chamber 17, to provide protection against overtravel conditions. The overtravel pressure relief features 18, 19 ordinarily do not allow gas in the pressure chamber 17 to exit the gas spring 10, absent an overtravel condition associated with the gas spring 10. But in the event of an overtravel condition, one or both of the overtravel pressure relief features 18, 19 enable release of pressurized gas from within the pressure chamber 17 of the gas spring 10 to thereby significantly decrease the pressure of any gas remaining in the pressure chamber 17. As used herein, the terminology "overtravel condition" includes a condition where a die member, or any other machine component with which the gas spring 10 interacts, travels beyond a design intent position with respect to the gas spring 10.

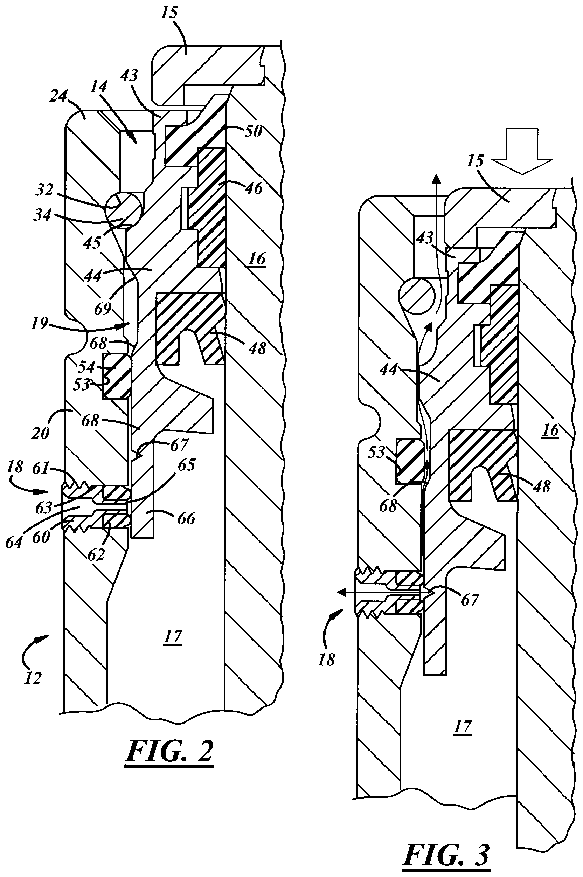

With reference to FIG. 2, the casing 12 includes a side wall 20 that terminates axially at a closed end 22 and at an open end 24 that receives the guide and seal assembly 14 and the piston rod 16 therein. The pressure chamber 17 is established at least in part by the side and end walls 20, 22 to receive a gas under pressure. The closed end 22 may be a separate component attached to the side wall 20, for example by a weld joint, or may be integrally produced with the side wall 20. The side wall 20 of the casing 12 has an inner surface 26 defining at least in part the pressure chamber 17, and an outer surface 30. The casing 12 may be of generally cylindrical shape, for example, wherein at least one of the inner or outer surfaces 26, 30 is cylindrical. The inner surface 26 of the side wall 20 may have a circumferential retainer groove 32 constructed for receipt of a retainer, shown here by way of example as a split ring 34, to maintain the gas spring 10 in its assembled state. To facilitate mounting and locating the gas spring 10 within a press, a pair of longitudinally spaced circumferential grooves 36, 38 may be machined, formed, or otherwise provided in the outer surface 30 of the casing 12 adjacent its ends 22, 24. To admit gas into the gas spring 10, the casing 12 may include a passage or fill port 40 that may be provided through the closed end 22 of the casing 12 in any suitable manner. The fill port 40 may include a threaded passage 42 for coupling of a fill valve 41, e.g., a Schrader valve, to the casing 12. The closed end 22 of the casing 12 also may include a passage 39 in fluid communication between and with the pressure chamber 17 and the fill port 40.

With reference to FIG. 2, the guide and seal assembly 14 may be disposed in the open end 24 of the casing 12 and may be sealingly coupled to the casing 12. The assembly 14 includes a piston rod housing 44, a guide bushing 46, a rod seal 48, a rod wiper 50, a dust cover (not shown), all of which may be carried by the housing 44, and a casing seal 54 that may be carried by the casing 12 in a seal groove 53. The guide bushing 46 may be composed of any suitable low friction material, and may be sized to slidably engage the piston rod 16 to guide the piston rod 16 for axial reciprocation within the casing 12. The housing 44 may include a shoulder 45 in an outer surface thereof to cooperate with the split ring 34, which may removably retain the housing 44 in the casing 12.

The piston rod 16 is disposed at least in part in the casing 12 and through the guide and seal assembly 14 for reciprocation along an axis A between extended and retracted positions over a cycle of the gas spring 10 including a retraction stroke and an extension or return stroke. The piston rod 16 is acted on by gas in the pressure chamber 17 to bias the piston rod 16 toward the extended position, and away from the retracted position. The piston rod 16 extends out of the casing 12 through the guide and seal assembly housing 44, and includes an outer axial end, and an inner axial end disposed in the casing 12 and that may be radially enlarged and engageable with a portion of the piston rod housing 44 to retain the piston rod 16 in the casing 12. The piston rod 16 is in sealing engagement with the rod seal 48 and in sliding engagement with the piston rod bushing 46 for guided relative movement between the extended and retracted positions.

The overtravel pressure relief feature 18 may be a vent plug including a plug body 60 and a plug seal 62 carried by the body 60. The feature 18 is carried in a vent passage 63 of the sidewall 20 of the casing 12. The plug body 60 may include a threaded outer diameter 61 for threading into the corresponding vent passage 63, which may be threaded. Accordingly, the plug body 60 also has a through passage 64 with a counterbore, which may have tool features to cooperate with a tool (not shown), for example, internal flats, for instance, hex flats for cooperation with an Allen wrench or the like for installing and/or removing the plug body 60. The plug body 60 further may include a stepped down end 65 to carry the plug seal 62. The plug seal 62 is an annular seal for sealing engagement with a lower portion or skirt 66 of the piston rod housing 44. The plug seal 62 may engage a smooth cylindrical portion of the housing 44, or any other suitable geometric portion of the housing 44 that provides a good seal. Additionally, the axial face of the stepped down end 65 of the plug body 60 may be in full circumferential contact with the housing 44. In any case, the vent plug establishes a fully circumferential, annular seal with the housing 44 that is ordinarily completely closed, absent an overtravel condition. The seal 62 may be composed of a urethane, nitrile, or any other suitable sealing material, and may be of 70-90 durometer on the Shore A scale.

The alternative overtravel pressure relief feature 19 may be a groove, notch, flattening, reduced diameter, or any other relief in an outer diameter of the piston rod housing 44. The feature 19 may include a lower end 68 that may be axially adjacent and/or overlapping a portion of the seal 54, and an upper end 69 axially spaced from the lower end 68. One or both of the ends 68, 69 may be conical or otherwise tapered surfaces.

With reference now to FIG. 3, when the piston 16 has travelled past a design-intent fully retracted position, such that the piston 16 has overtravelled, one or both of the relief features 18, 19 enable desired depressurization of the pressure chamber 17. When the piston 16 overtravels, the piston plate 15 strikes an upper end 43 of the housing 44 to displace the housing 44 into the casing 12.

The overtravel pressure relief feature 18 enables depressurization when the piston rod housing 44 is displaced into the casing 12 to an extent that some recessed feature of the housing 44 axially overlaps the seal 62 so as weaken, interrupt, or otherwise breach the seal between the seal 62 and the housing 44 to allow gas to escape therebetween and out of the side of the gas spring 10 as indicated by horizontal arrows. In the illustrated embodiment, the recessed feature includes at least the lower portion 68 of the alternative feature 19. In other embodiments, the recessed feature may include some lower portion or extension of the seal groove 53, or any other suitable shallow groove, relief, or recess.

The alternative feature 19 enables depressurization when the piston rod housing 44 is displaced into the casing 12 to an extent that the lower portion of the feature 19 is displaced past a lower portion of the seal 54 so as to weaken or interrupt sealing between the seal 62 and the housing 44 to allow gas to escape therebetween and out of the open end of the gas spring 10 as indicated by vertical arrows in FIG. 3.

The gas spring 10 may be assembled in any suitable manner and its various components may be manufactured in any suitable manner and composed of any suitable materials. For example, the casing 12 may be turned, bored, drilled, tapped, and/or otherwise machined from tube and/or solid bar stock. In another example, the vent plug body 60 may be constructed from, for example, steel, brass, copper, carbon fiber, and/or any other suitable material(s).

In assembly, the guide and seal assembly 14 may be preassembled, and the piston rod 16 may be assembled through the housing 44, and the assembly 14 with the rod 16 therein may be assembled into the casing 12 and retained therein in any suitable manner, for example via assembly of the split ring 34 into the groove 32. Thereafter, the vent plug may be threaded or otherwise coupled to the casing 12 until the seal 62 seals with the housing 44.

In operation, and with respect to FIG. 1, any suitable pressurizing device (not shown) may be coupled to the port 40 to open the valve 41 and introduce pressurized gas through the port 40 into the chamber 17. Once a desired pressure is reached, the pressurizing device may be retracted to allow the valve 41 to seat and thereby seal the pressurized gas within the pressure chamber 17.

Thereafter, the gas spring 10 may be used for any suitable purpose and, in the event of an overtravel condition where a machine component travels beyond a design intent position with respect to the gas spring 10, the piston plate 15 strikes the exterior end of the housing 44, thereby displacing the housing 44 axially into the casing 12, and thereby resulting in breach or unseating of one or more of the seals 54, 62. Such unseating will allow pressurized gas in the chamber 17 to escape through one or both of the features 18, 19.

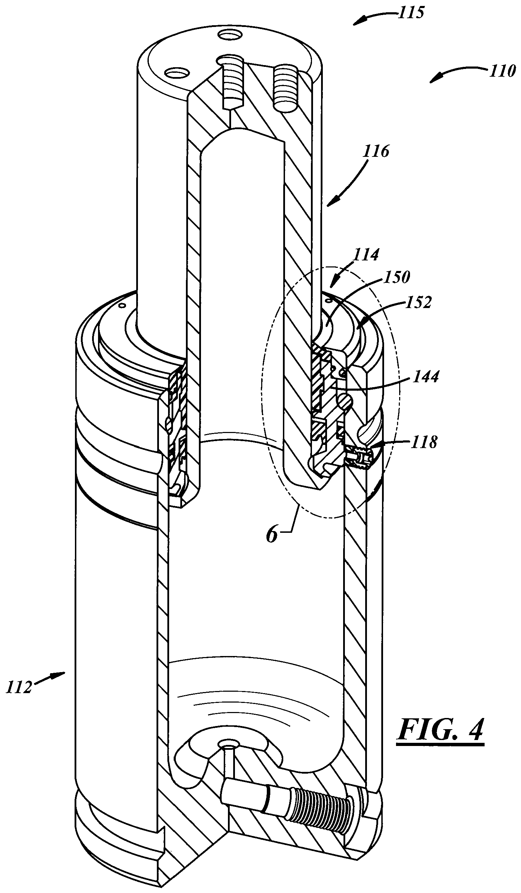

FIGS. 4-7 illustrate another presently preferred form of a gas spring 110. This form is similar in many respects to the form of FIGS. 1-3 and like numerals between the forms generally designate like or corresponding elements throughout the several views of the drawing figures. Accordingly, the description of the embodiments are incorporated by reference into one another in their entireties, and a description of the common subject matter generally may not be repeated here.

The gas spring 110 includes a guide and seal assembly 114 including an annular housing cap 152 coupled to an upper end 143 of a piston rod housing 144 and trapping a wiper 150 therebetween. The cap 152 extends the length of the housing 144 so that the housing 144 projects beyond the open end of the casing 112 and may allow for partial travel of the housing 144 axially into the casing 112 in that the cap 152 may be stopped by the retaining ring 134. The cap 152 may be coupled to the housing 144 by fasteners, threading or other integral fastening, welding, or in any suitable manner.

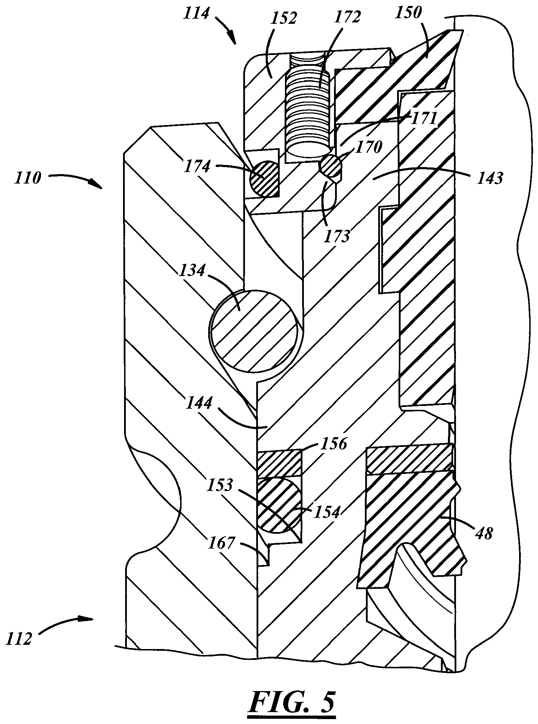

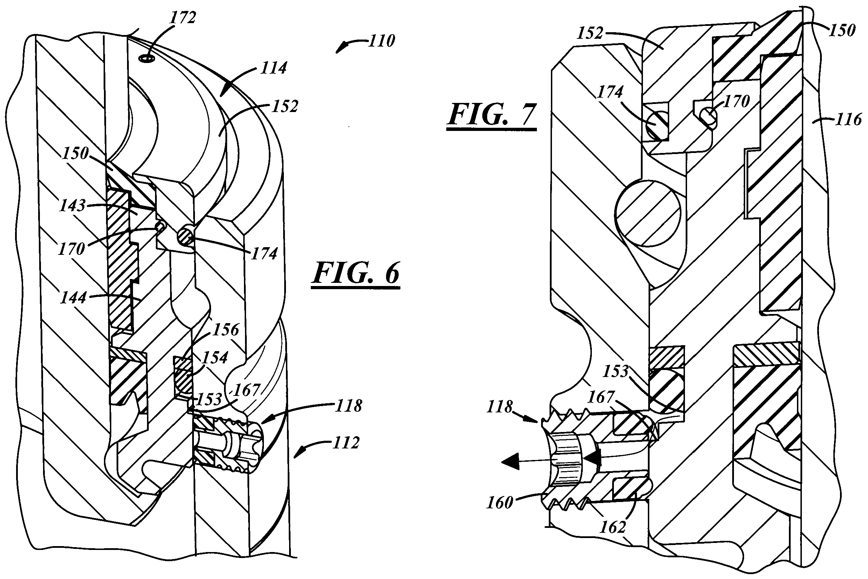

For example, and with respect to FIGS. 5 and 6, a retention ring 170 may be carried between corresponding radially outwardly and inwardly extending shoulders 171, 173 of the housing 144 and the cap 152, respectively. Also, set screws 172 may be threaded into the cap 152 and into engagement with the retention ring 170 to seat the retention ring 170 to the corresponding housing shoulder 171. The retention ring 170 may be a C-shaped ring. Additionally, the cap 152 may carry an annular seal 174 for sealing the assembly 114 to the casing 112.

With reference to FIG. 6, the assembly 114 also may include a piston rod housing seal 154 and a seal backup 156 that may be carried by the housing 144 in a seal groove 153. Also, the housing 144 may include a step, turned down annulus, notch, circumferential groove, spiral groove, flattening, or any other suitable recessed feature 167, which may be axially adjacent to and in recessed communication with the seal groove 153.

Accordingly, as illustrated in FIG. 7, when the piston 116 has travelled past a design-intent fully retracted position, such that the piston 116 has overtravelled, the relief feature 118 enables desired depressurization of the gas spring 110. When a die plate or other machine component and the piston 116 overtravel, the machine component strikes the cap 152 to displace the housing 144 axially into the casing 112.

The relief feature 118 enables depressurization when the piston rod housing 144 is axially displaced into the casing 112 to an extent that the recessed feature 167 of the housing 144 axially overlaps the plug seal 162 so as to weaken, interrupt, or otherwise breach the seal between the seal 162 and the housing 144 to allow gas to escape therebetween and out of the side of the gas spring 110 via the passage through the plug 160 as indicated by the horizontal arrows in FIG. 7.

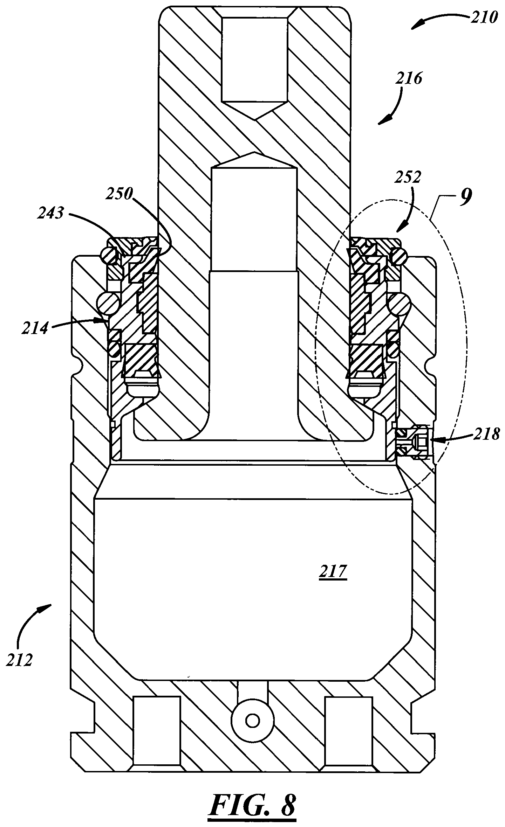

FIGS. 8-10 illustrate another presently preferred form of a gas spring 210. This form is similar in many respects to the form of FIGS. 1-7 and like numerals between the forms generally designate like or corresponding elements throughout the several views of the drawing figures. Accordingly, the description of the embodiments are incorporated by reference into one another in their entireties, and a description of the common subject matter generally may not be repeated here.

The gas spring 210 includes a casing 212, a guide and seal assembly 214 carried by the casing 12, a piston rod 216 carried by the casing 212 and extending through the guide and seal assembly 214, and a pressure chamber 217 to hold a pressurized gas. Also, the gas spring 210 includes an overtravel pressure relief feature 218. The guide and seal assembly 214 includes a housing cap 252 that is coupled to an upper end 243 of a piston rod housing 244 and traps a wiper 250 therebetween.

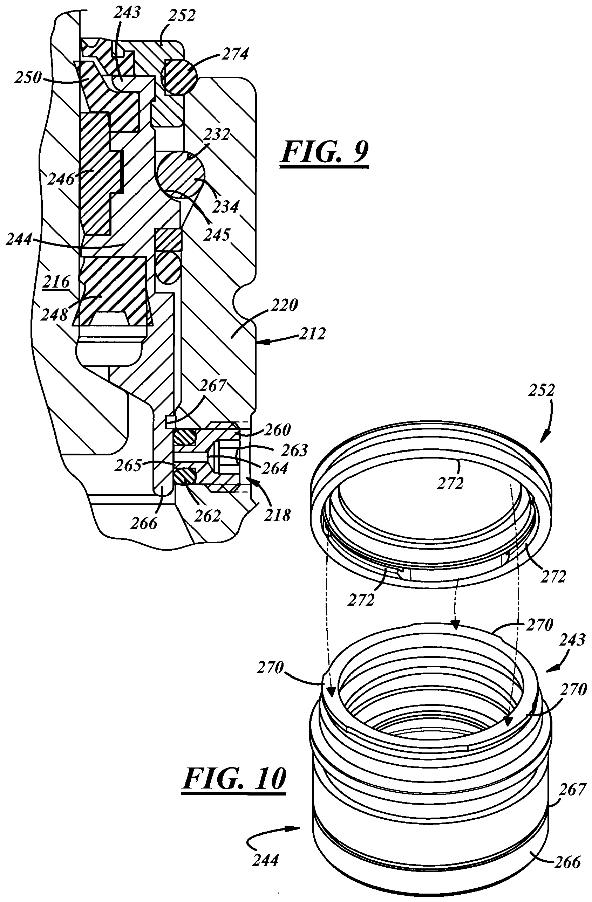

With respect to FIGS. 9 and 10, the cap 252 may be coupled to the housing 244 by an integral coupling configuration, for example, a bayonet connection. More specifically, the cap 252 may be of generally cylindrical configuration and may include a plurality of radially inwardly extending bayonet lugs 272. Likewise, the upper end 243 of the piston rod housing 244 may be of generally cylindrical configuration and may include a plurality of radially outwardly extending bayonet lugs 270 for cooperation with the cap lugs 272. In assembly, the cap 252 is lowered over the housing upper end 243 so that the cap lugs 272 register in spaces between the housing lugs 270. Then, the cap 252 is rotated so that the cap lugs 272 underlie and engage the housing lugs 270 to lock the cap 252 onto the housing 244.

The overtravel pressure relief feature 218 may be a vent plug including a plug body 260 and a plug seal 262 carried by the body 260. The feature 218 is in a vent passage 263 of a sidewall 220 of the casing 212. The plug body 260 may be coupled into the corresponding vent passage 263 by threading or in any other suitable manner. The plug body 260 has a through passage 264 and a sealing end 265 carrying a plug seal 262 that engages the housing 244. As indicated in FIG. 9, the axial end face of the end 265 of the plug body 260 is in full circumferential contact with the housing 244. Also, the housing 244 includes a recessed feature 267, which may be a fully circumferential groove as shown, or a step, turned down annulus, notch, spiral groove, flattening, or any other suitable recessed feature axially adjacent to and normally downstream of the plug body 260 and seal 262.

In the event of an overtravel condition where a machine component travels beyond a design intent position with respect to the gas spring 110, the machine component strikes the cap 252, thereby axially displacing the housing 244 further into the casing 212, and thereby moving the recessed feature 267 into fluid communication with the through passage 264 of the plug 260 to allow pressurized gas in the chamber 217 to escape through the overtravel feature 218.

In one or more of the forms disclosed above, the overtravel pressure relief features do not fail during normal use from pressure fluctuations, for example, over 150-300 bar. Also, the features are retained during an overtravel condition to prevent any secondary hazard. Moreover, the overtravel pressure relief feature is configured to discharge pressure with overtravel on the order of 0.5 to 1.5 mm, for example. The overtravel pressure relief feature allows for normal operation of a gas spring and is configured for retrofit of existing products, which also can be serviced by an existing product repair kit and procedure.

It should be appreciated that one of ordinary skill in the art will recognize other embodiments encompassed within the scope of this invention. The plurality of arrangements shown and described above are merely illustrative and not a complete or exhaustive list or representation. Of course, still other embodiments and implementations can be achieved in view of this disclosure. The embodiments described above are intended to be illustrative and not limiting. The scope of the invention is defined by the claims that follow.

## Claims

1. A gas spring (10; 110; 210) for forming equipment,
comprising:
a casing (12; 112; 212) including an axially extending side wall (20; 120; 220), an open end (24; 124; 224), a transversely extending closed end wall (22; 122; 222) axially spaced from the open end (24; 124; 224), a pressure chamber (17; 117; 217) established in part by the side (20; 120; 220) and end walls (22; 122; 222) to receive a gas under pressure, and a vent passage (63; 163; 263) through the side wall (20; 120; 220);
a piston rod (16; 116; 216) received at least in part in the casing (12; 112; 212) for reciprocation between extended and retracted positions;
a piston rod housing (44; 144; 244) received at least in part in the casing (12; 112; 212) between the piston rod (16; 116; 216) and the casing (12; 112; 212) and axially movable into the casing (12; 112; 212) in the event of an overtravel condition; and
an overtravel pressure relief feature (18; 118; 218), **characterized in that**
the overtravel relief feature (118; 118; 218) is carried in the vent passage (63; 163; 263) of the casing (12; 112; 212) and having a through passage (64; 164; 264) and an annular seal (62; 162; 262) that seals against the piston rod housing (44; 144; 244) to prevent escape of the gas through the vent passage (63; 163; 263);
a recessed feature (67; 167; 267) in the piston rod housing (44; 144; 244) axially adjacent to and normally downstream of the annular seal (62; 162; 262); and
in the event of an overtravel condition, the piston rod housing (44; 144; 244) being axially displaced into the casing (12; 112; 212) sufficiently to move the recessed feature (67; 167; 267) into fluid communication with the through passage (64; 164; 264) to allow pressurized gas in the chamber (17; 117; 217) to escape through the vent passage (63; 163; 263).

2. The gas spring (10; 110; 210) of claim 1, wherein the overtravel pressure relief feature (18; 118; 218) includes a hollow plug body (60; 160; 260) disposed in the vent passage (63; 163; 263), coupled to the casing (12; 112; 212) and carrying the annular seal (62; 162; 262).

3. The gas spring (10; 110; 210) of claim 1, wherein the overtravel pressure relief feature (18; 118; 218) includes a hollow plug body (60; 160; 260) having a threaded portion threaded into the vent passage (63; 163; 263) of the casing (12; 112; 212) and having a stepped down end (65; 165; 265) carrying the annular seal (62; 162; 262).

4. The gas spring (10; 110; 210) of claim 1, wherein the piston rod housing (44; 144; 244) includes a cylindrical outer surface with a portion normally in sealing engagement with the annular seal (62; 162; 262) and the recessed feature (67; 167; 267) axially adjacent the annular seal (62; 162; 262) is in the cylindrical outer surface, wherein displacement of the piston rod housing (44; 144; 244) into the casing (12; 112; 212) results in breach of the annular seal (62; 162; 262) by the recessed feature (67; 167; 267).

5. The gas spring (10; 110; 210) of claim 4, wherein the recessed feature (67; 167; 267) comprises an annular groove in the cylindrical outer surface of the piston rod housing (44; 144; 244) axially spaced from the annular seal (62; 162; 262).

6. The gas spring (10; 110; 210) of claim 1, wherein the casing (12; 112; 212) includes an internal annular casing seal groove (53; 153; 253) carrying an annular casing seal (54; 154; 254), and the piston rod housing (44; 144; 244) includes an overtravel pressure relief feature (19; 119; 219) axially adjacent the casing seal (54; 154; 254), wherein displacement of the housing (44; 144; 244) into the casing (12; 112; 212) results in breach of the casing seal (54; 154; 254).

7. The gas spring (10; 110; 210) of claim 6, wherein the overtravel pressure relief feature (19; 119; 219) is an axially extending recessed portion in the piston rod housing (4; 144; 244).

8. The gas spring (10; 110; 210) of claim 1, further comprising a housing cap (52; 152; 252) coupled to an upper end (43; 143; 243) of the piston rod housing (44; 144; 244) to extend the length of the housing (44; 144; 244), wherein the housing cap (52; 152; 252) and the upper end (43; 143; 243) of the piston rod housing (44; 144; 244) are coupled together via a retention ring (70; 170; 270) and a plurality of set screws (72; 172; 272), wherein the retention ring (70; 170; 270) is carried between corresponding radially outwardly and inwardly extending shoulders of the housing (44; 144; 244) and the cap (52; 152; 252), and wherein the set screws (72; 172; 272) are threaded through the cap (52; 152; 252) into engagement with the retention ring (70; 170; 270) to seat the retention ring (70; 170; 270) to the corresponding housing shoulder (171; 173; 271; 273).

9. The gas spring (10; 110; 210) of claim 1, further comprising a housing cap (52; 152; 252) cap coupled to an upper end (43; 143; 243) of the piston rod housing (44; 144; 244) to extend the length of the housing (44; 144; 244), wherein the housing cap (52; 152; 252) and the upper end (43; 143; 243) of the piston rod housing (44; 144; 244) are coupled together via a bayonet coupling.

10. The gas spring (10; 110; 210) of claim 1, further comprising:
an internal annular casing seal groove (53; 153; 253) in the casing (12; 112; 212);
an annular casing seal (54; 154; 254) carried in the seal groove (53; 153; 253) in the casing (12; 112; 212); and
the piston rod housing (44; 144; 244) normally being in sealing engagement with the casing seal (54; 154; 254) and having a recessed feature (67; 167; 267) downstream of and axially adjacent the casing seal (54; 154; 254), wherein displacement of the housing (44; 144; 244) into the casing (12; 112; 212) moves the recessed feature (67; 167; 267) to overlap and extend axially beyond a portion of the casing seal (54; 154; 254) to permit gas under pressure in the chamber (17; 117; 217) to escape through the recessed feature (67; 167; 267) of the piston rod housing (44; 144; 244).

## Patentansprüche

1. Eine Gasfeder (10; 110; 210) für Umformvorrichtungen, umfassend:
einen Gehäusemantel (12; 112; 212) mit einer sich axial erstreckenden Seitenwand (20; 120; 220), einem offenen Ende (24; 124; 224), einer sich quer erstreckenden geschlossenen Endwand (22; 122; 222), die axial von dem offenen Ende (24; 124; 224) beabstandet ist, einer Druckkammer (17; 117; 217), die teilweise durch die Seiten- (20; 120; 220) und Endwände (22; 122; 222) gebildet ist, um ein Gas unter Druck aufzunehmen; und einem Lüftungsdurchgang (63; 163; 263) durch die Seitenwand (20; 120; 220);
eine Kolbenstange (16; 116; 216), die zumindest teilweise in dem Gehäusemantel (12; 112; 212) zum Hin- und Herbewegen zwischen ausgefahrenen und eingefahrenen Stellungen aufgenommen ist;
ein Kolbenstangengehäuse (44; 144; 244), das zumindest teilweise in dem Gehäusemantel (12; 112; 212) zwischen der Kolbenstange (16; 116; 216) und dem Gehäusemantel (12; 112; 212) aufgenommen ist und im Fall eines Begrenzungszustands axial in den Gehäusemantel (12; 112; 212) bewegbar ist; und
ein Begrenzungsdruckentlastungsmerkmal (18; 118; 218), **dadurch gekennzeichnet, dass**
das Begrenzungsdruckentlastungsmerkmal (118; 118; 218) in dem Lüftungsdurchgang (63; 163; 263) des Gehäusemantels (12; 112; 212) getragen wird und einen Durchgang (64; 164; 264) sowie eine ringförmige Dichtung (62; 162; 262) aufweist, die gegen das Kolbenstangengehäuse (44; 144; 244) abdichtet, um ein Entweichen des Gases durch den Lüftungsdurchgang (63; 163; 263) zu verhindern;
ein vertieftes Merkmal (67; 167; 267) in dem Kolbenstangengehäuse (44; 144; 244), axial benachbart und in der Regel stromabwärts der ringförmigen Dichtung (62; 162; 262) angeordnet; und
im Fall eines Begrenzungszustands wird das Kolbenstangengehäuse (44; 144; 244) axial ausreichend in den Gehäusemantel (12; 112; 212) verschoben, um das vertiefte Merkmal (67; 167; 267) in Fluidverbindung mit dem Durchgang (64; 164; 264) zu bewegen, um unter Druck stehendem Gas in der Kammer (17; 117; 217) zu gestatten, durch den Lüftungsdurchgang (63; 163; 263) zu entweichen.

2. Die Gasfeder (10; 110; 210) nach Anspruch 1, wobei das Begrenzungsdruckentlastungsmerkmal (18; 118; 218) einen hohlen Stopfen-Körper (60; 160; 260) umfasst, der im Lüftungsdurchgang (63; 163; 263) angeordnet ist, mit dem Gehäusemantel (12; 112; 212) in Verbindung steht und die ringförmige Dichtung (62; 162; 262) trägt.

3. Die Gasfeder (10; 110; 210) nach Anspruch 1, wobei das Begrenzungsdruckentlastungsmerkmal (18; 118; 218) einen hohlen Stopfen-Körper (60; 160; 260) mit einem Gewindebereich aufweist, der in den Lüftungsdurchgang (63; 163; 263) des Gehäusemantels (12; 112; 212) eingeschraubt ist und ein abgestuftes Ende (65; 165; 265) aufweist, das die ringförmige Dichtung (62; 162; 262) trägt.

4. Die Gasfeder (10; 110; 210) nach Anspruch 1, bei der das Kolbenstangengehäuse (44; 144; 244) eine zylindrische äußere Oberfläche mit einem Bereich aufweist, der in der Regel in dichtendem Eingriff mit der ringförmigen Dichtung (62; 162; 262) steht, und das vertiefte Merkmal (67; 167; 267) axial benachbart zu der ringförmigen Dichtung (62; 162; 262) ist in der zylindrischen äußeren Oberfläche angeordnet, wobei ein Versetzen des Kolbenstangengehäuses (44; 144; 244) in den Gehäusemantel (12; 112; 212) zu einem Bruch der ringförmigen Dichtung (62; 162; 262) durch das vertiefte Merkmal (67; 167; 267) führt.

5. Die Gasfeder (10; 110; 210) nach Anspruch 4, wobei das vertiefte Merkmal (67; 167; 267) eine ringförmige Nut in der zylindrischen äußeren Oberfläche des Kolbenstangengehäuses (44; 144; 244) aufweist, die axial von der ringförmigen Dichtung (62; 162; 262) beabstandet ist.

6. Die Gasfeder (10; 110; 210) nach Anspruch 1, wobei der Gehäusemantel (12; 112; 212) eine innere ringförmige Gehäusedichtungsnut (53; 153; 253) aufweist, die eine ringförmige Gehäusedichtung (54; 154; 254) trägt, und das Kolbenstangengehäuse (44; 144; 244) weist ein Begrenzungsdruckentlastungsmerkmal (19; 119; 219) axial benachbart zu der Gehäusedichtung (54; 154; 254) auf, wobei ein Versetzen des Gehäuses (44; 144; 244) in den Gehäusemantel (12; 112; 212) zu einem Bruch der Gehäusedichtung (54; 154; 254) führt.

7. Die Gasfeder (10; 110; 210) nach Anspruch 6, wobei das Begrenzungsdruckentlastungsmerkmal (19; 119; 219) ein axial verlaufender, vertiefter Bereich in dem Kolbenstangengehäuse (44; 144; 244) ist.

8. Die Gasfeder (10; 110; 210) nach Anspruch 1, außerdem umfassend eine Gehäuseabdeckung (52; 152; 252), die mit einem oberen Ende (43; 143; 243) des Kolbenstangengehäuses (44; 144; 244) in Verbindung steht, um die Länge des Gehäuses (44; 144; 244) zu verlängern, wobei die Gehäuseabdeckung (52; 152; 252) und das obere Ende (43; 143; 243) des Kolbenstangengehäuses (44; 144; 244) über einen Haltering (70; 170; 270) und eine Mehrzahl von Stellschrauben (72; 172; 272) miteinander verbunden sind, wobei der Haltering (70; 170; 270) zwischen entsprechenden radial nach außen und innen verlaufenden Schultern des Gehäuses (44; 144; 244) und der Abdeckung (52; 152; 252) getragen wird, und wobei die Stellschrauben (72; 172; 272) durch die Abdeckung (52; 152; 252) in Eingriff mit dem Haltering (70; 170; 270) geschraubt werden, um den Haltering (70; 170; 270) auf die entsprechende Gehäuseschulter (171; 173; 271; 273) zu setzen.

9. Die Gasfeder (10; 110; 210) nach Anspruch 1, außerdem umfassend eine Gehäuseabdeckung (52; 152; 252), die mit einem oberen Ende (43; 143; 243) des Kolbenstangengehäuses (44; 144; 244) in Verbindung steht, um die Länge des Gehäuses (44; 144; 244) zu verlängern, wobei die Gehäuseabdeckung (52; 152; 252) und das obere Ende (43; 143; 243) des Kolbenstangengehäuses (44; 144; 244) über eine Bajonettkupplung miteinander in Verbindung stehen.

10. Die Gasfeder (10; 110; 210) nach Anspruch 1, außerdem umfassend:
eine innere ringförmige Gehäusedichtungsnut (53; 153; 253) in dem Gehäusemantel (12; 112; 212);
eine ringförmige Gehäusedichtung (54; 154; 254), die in der Dichtungsnut (53; 153; 253) in dem Gehäusemantel (12; 112; 212) getragen wird; und
das Kolbenstangengehäuse (44; 144; 244) steht in der Regel in dichtendem Eingriff mit der Gehäusedichtung (54; 154; 254) und hat ein vertieftes Merkmal (67; 167; 267) stromabwärts von und axial benachbart zu der Gehäusedichtung (54; 154; 254), wobei ein Versetzen des Gehäuses (44; 144; 244) in den Gehäusemantel (12; 112; 212) das vertiefte Merkmal (67; 167; 267) so bewegt, dass es einen Bereich der Gehäusedichtung (54; 154; 254) überlappt und sich axial über diesen hinaus erstreckt, um unter Druck stehendem Gas in der Kammer (17; 117; 217) zu gestatten, durch das vertiefte Merkmal (67; 167; 267) des Kolbenstangengehäuses (44; 144; 244) zu entweichen.

## Revendications

1. Ressort à gaz (10 ; 110 ; 210) pour former un équipement,
comprenant :
un carter (12; 112; 212) comprenant une paroi latérale s'étendant axialement (20 ; 120 ; 220), une extrémité ouverte (24 ; 124 ; 224), une paroi d'extrémité fermée s'étendant transversalement (22; 122; 222) espacée axialement de l'extrémité ouverte (24 ; 124 ; 224), une chambre de pression (17 ; 117 ; 217) établie en partie par les parois latérales (20; 120; 220) et d'extrémité (22; 122; 222) pour recevoir un gaz sous pression, et un passage d'évent (63 ; 163 ; 263) à travers la paroi latérale (20 ; 120 ; 220) ;
une tige de piston (16 ; 116; 216) reçue au moins en partie dans le carter (12 ; 112 ; 212) pour un mouvement alternatif entre des positions étendue et rétractée ;
un boîtier de tige de piston (44 ; 144; 244) reçu au moins en partie dans le carter (12 ; 112 ; 212) entre la tige de piston (16 ; 116; 216) et le carter (12 ; 112; 212) et axialement mobile dans le carter (12; 112; 212) en cas de condition de dépassement de course ; et
un élément de décharge de pression de dépassement de course (18; 118 ; 218), **caractérisé en ce que**
l'élément de décharge de dépassement de course (118; 118; 218) est transporté dans le passage d'évent (63 ; 163; 263) du carter (12 ; 112; 212) et ayant un passage traversant (64; 164; 264) et un joint annulaire (62 ; 162 ; 262) qui assure une étanchéité contre le boîtier de tige de piston (44 ; 144; 244) pour empêcher une fuite du gaz à travers le passage d'évent (63 ; 163 ; 263) ;
un élément en retrait (67 ; 167 ; 267) dans le boîtier de tige de piston (44 ; 144 ; 244) axialement adjacent à et normalement en aval du joint annulaire (62 ; 162 ; 262) ; et
dans le cas d'une condition de dépassement de course, le boîtier de tige de episton (44 ; 144 ; 244) étant transporté axialement dans le carter (12 ; 112 ; 212) suffisamment pour déplacer l'élément en retrait (67 ; 167 ; 267) en communication fluidique avec le passage traversant (64 ; 164 ; 264) pour permettre à un gaz sous pression dans la chambre (17 ; 117 ; 217) de s'échapper à travers le passage d'évent (63 ; 163 ; 263).

2. Ressort à gaz (10 ; 110 ; 210) selon la revendication 1, dans lequel l'élément de décharge de pression de dépassement de course (18 ; 118 ; 218) comprend un corps de bouchon creux (60 ; 160 ; 260) placé dans le passage d'évent (63 ; 163 ; 263), couplé au carter (12 ; 112 ; 212) et transportant le joint annulaire (62 ; 162 ; 262).

3. Ressort à gaz (10 ; 110 ; 210) selon la revendication 1, dans lequel l'élément de décharge de pression de dépassement de course (18 ; 118 ; 218) comprend un corps de bouchon creux (60 ; 160 ; 260) ayant une partie filetée vissée dans le passage d'évent (63 ; 163 ; 263) du carter (12 ; 112 ; 212) et ayant une extrémité étagée vers le bas (65 ; 165 ; 265) transportant le joint annulaire (62 ; 162 ; 262).

4. Ressort à gaz (10 ; 110 ; 210) selon la revendication 1, dans lequel le boîtier de tige de piston (44 ; 144 ; 244) comprend une surface extérieure cylindrique avec une partie normalement en mise en prise étanche avec le joint annulaire (62 ; 162 ; 262) et l'élément en retrait (67 ; 167 ; 267) axialement adjacente au joint annulaire (62 ; 162 ; 262) est dans la surface extérieure cylindrique, dans lequel le déplacement du boîtier de tige de piston (44 ; 144 ; 244) dans le carter (12 ; 112 ; 212) entraîne un bris du joint annulaire (62 ; 162 ; 262) par l'élément en retrait (67 ; 167 ; 267).

5. Ressort à gaz (10 ; 110 ; 210) selon la revendication 4, dans lequel l'élément en retrait (67 ; 167 ; 267) comprend une rainure annulaire dans la surface extérieure cylindrique du boîtier de tige de piston (44 ; 144 ; 244) axialement espacée du joint annulaire (62 ; 162 ; 262).

6. Ressort à gaz (10 ; 110 ; 210) selon la revendication 1, dans lequel le carter (12 ; 112 ; 212) comprend une rainure de joint de carter annulaire interne (53 ; 153 ; 253) transportant un joint de carter annulaire (54 ; 154 ; 254), et le boîtier de tige de piston (44 ; 144 ; 244) comprend un élément de décharge de pression de dépassement de course (19 ; 119 ; 219) axialement adjacent au joint de carter (54 ; 154 ; 254), dans lequel le déplacement du boîtier (44 ; 144 ; 244) dans le carter (12 ; 112 ; 212) entraîne un bris du joint de carter (54 ; 154 ; 254).

7. Ressort à gaz (10 ; 110 ; 210) selon la revendication 6, dans lequel l'élément de décharge de pression de dépassement de course (19 ; 119 ; 219) est une partie en retrait s'étendant axialement dans le boîtier de tige de piston (44 ; 144 ; 244).

8. Ressort à gaz (10 ; 110 ; 210) selon la revendication 1, comprenant en outre un capuchon de boîtier (52 ; 152; 252) couplé à une extrémité supérieure (43 ; 143 ; 243) du boîtier de tige de piston (44 ; 144 ; 244) pour s'étendre sur la longueur du boîtier (44 ; 144 ; 244), dans lequel le capuchon de boîtier (52 ; 152 ; 252) et l'extrémité supérieure (43 ; 143 ; 243) du boîtier de tige de piston (44 ; 144 ; 244) sont couplés ensemble par une bague de retenue (70 ; 170 ; 270) et une pluralité de vis de réglage (72 ; 172 ; 272), dans lequel la bague de retenue (70 ; 170 ; 270) est transportée entre des épaulements s'étendant radialement vers l'intérieur et l'extérieur correspondants du boîtier (44 ; 144 ; 244) et le capuchon (52 ; 152 ; 252), et dans lequel les vis de réglage (72 ; 172 ; 272) sont vissées à travers le capuchon (52 ; 152 ; 252) en mise en prise avec la bague de retenue (70 ; 170 ; 270) pour asseoir la bague de rétention (70 ; 170 ; 270) à l'épaulement du boîtier correspondant (171 ; 173 ; 271 ; 273).

9. Ressort à gaz (10 ; 110 ; 210) selon la revendication 1, comprenant en outre un capuchon de boîtier (52 ; 152 ; 252) couplé à une extrémité supérieure (43; 143; 243) du boîtier de tige de piston (44 ; 144 ; 244) pour s'étendre sur la longueur du boîtier (44 ; 144 ; 244), dans lequel le capuchon de boîtier (52 ; 152 ; 252) et l'extrémité supérieure (43 ; 143 ; 243) du boîtier de tige de piston (44 ; 144 ; 244) sont couplés ensemble par un raccord à baïonnette.

10. Ressort à gaz (10 ; 110 ; 210) selon la revendication 1, comprenant en outre :
une rainure de joint de carter annulaire interne (53 ; 153 ; 253) dans le carter (12 ; 112 ; 212);
un joint de carter annulaire (54 ; 154 ; 254) transporté dans la rainure de joint (53; 153; 253) dans le carter (12 ; 112 ; 212) ; et
le boîtier de tige de piston (44 ; 144 ; 244) étant normalement dans une mise en prise étanche avec le joint de carter (54 ; 154 ; 254) et ayant un élément en retrait (67 ; 167 ; 267) en aval de et axialement adjacent au joint de carter (54 ; 154 ; 254), dans lequel un déplacement du boîtier (44 ; 144 ; 244) dans le carter (12 ; 112 ; 212) déplace l'élément en retrait (67 ; 167 ; 267) pour chevaucher et s'étendre axialement au-delà d'une partie du joint de carter (54 ; 154 ; 254) pour permettre à un gaz sous pression dans la chambre (17 ; 117 ; 217) de s'échapper à travers l'élément en retrait (67 ; 167 ; 267) du boîtier de tige de piston (44 ; 144 ; 244).
